# EUROPEAN PATENT APPLICATION

(11) **EP 4 600 320 A1**
(43) Date of publication of application: **13.08.2025**
(21) Application number: 24812050.3
(22) Date of filing: 21.06.2024
(51) Int. Cl.: C09D 183/04, C09D 7/61, C09D 7/63

(54) **DOUBLE-LAYER COATING AND PREPARATION METHOD THEREFOR AND USE THEREOF**

(30) Priority: 08.12.2023 CN 202311682247
(71) Applicant: Wuhu Midea Smart Kitchen Appliance Manufacturing Co., Ltd., Wuhu, Anhui 241000 (CN)
(72) Inventor: ZHAO, Li, Wuhu Anhui 241012 (CN); XIE, Yaguang, Wuhu Anhui 241012 (CN)
(74) Representative: Ran, Handong
(86) International application number: PCT/CN2024/100628
(87) International publication number: WO 2025/118549

(57) **Abstract**

The present application relates to the technical field of coatings and provides a double-layer coating and preparation method therefor, and application thereof. The double-layer coating comprises a priming coating and a top coating, the priming coating comprises a ceramic precursor and a resin, the ceramic precursor is composed of a polysilane-like compound and a metal precursor, the polysilane-like compound is selected from one or more of polycarbosilane, polyborosilazane, and polysilicon-boron-carbon-nitrogen, and the metal precursor is selected from one or more of a zirconium precursor, an aluminum precursor, and a titanium precursor. The priming coating of the present application uses a copolymerization product obtained by reacting the ceramic precursor with the resin as the main resin, and the ceramic precursor is composed of the specific polysilane-like compound and the metal precursor, achieving low adhesion performance on the material surface, thereby effectively preventing the formation of limescale, while also improving anti-corrosion performance and reducing energy consumption.

## Description

### Cross-reference to related applications

The present application claims priority to Chinese Patent Application No. 202311682247.1, filed on December 8, 2023, entitled "DOUBLE-LAYER COATING AND PREPARATION METHOD THEREFOR, AND APPLICATION THEREOF", and the entire disclosure of which is incorporated herein by reference in its entirety.

### Technical Field

The present application relates to the technical field of coatings, and in particular to a double-layer coating and preparation method therefor, and application thereof.

### Background Art

Coatings are a type of liquid or solid material that can form a thin film under certain conditions on the surface of an object to provide protection, decoration, or other special functions such as insulation, rust prevention, mildew proof, and heat resistance. Coatings can be divided into architectural coatings, automotive coatings, household appliance coatings, wood coatings and the like. With the development of the household appliance industry, there is an increasing demand for the performance and functionality of household appliance coatings.

Enamel and stainless steel are the most widely used coating materials in water heater products, wherein, enamel is widely used in the production of water heaters due to its high hardness, excellent scratch resistance, and high-temperature resistance. Stainless steel has also won a large number of uses due to its excellent corrosion resistance.

However, enamel has the following disadvantages: (1) high sintering temperature (most of which is greater than 800°C) and high energy consumption; (2) potential risks of heavy metals; (3) low yield, and defects such as bursting and burnt enamel are prone to occur; (4) roughening pre-treatment such as sandblasting is required; (5) the surface is difficult to clean, and problems such as limescale is prone to occur during the operation of the heater.

However, stainless steel has poor temperature resistance and begins to oxidize at around 250°C, resulting in reducing its corrosion resistance. In addition, the surface is difficult to clean, and limescale is prone to occur during the operation of the heater.

### Summary

The present application is intended to solve at least one of the technical problems existing in the related art. To this end, the present application provides a double-layer coating and preparation method therefor and application thereof. The double-layer coat formed by the double-layer coating has excellent properties such as low viscosity, high adhesion, and anti-corrosion. The present application is intended to solve the technical problems of limescale, corrosion, high energy consumption and the like caused by the long-term use of enamel or stainless steel materials in water heaters in the household appliance industry.

In the first aspect, the present application provides a double-layer coating, comprising a priming coating and a top coating, wherein the priming coating comprises a ceramic precursor and a resin, wherein the ceramic precursor is composed of a polysilane-like compound and a metal precursor, wherein the polysilane-like compound is selected from one or more of polycarbosilane, polyborosilazane, and polysilicon-boron-carbon-nitrogen, and the metal precursor is selected from one or more of a zirconium precursor, an aluminum precursor, and a titanium precursor.

In some embodiments, the mass ratio of the polysilane-like compound to the metal precursor is 3:1 to 1:6.

In some embodiments, the resin is polysiloxane resin and/or epoxy resin.

In some embodiments, the resin is a mixture of polysiloxane resin and epoxy resin in a mass ratio of 20:0 to 8:15.

In some embodiments, the mass ratio of the ceramic precursor to the resin is 99:1 to 10:90.

In some embodiments, the priming coating further comprises one or more of a filler, a solvent, and an additive.

In some embodiments, the filler is selected from one or more of silicon carbide, talc, glass flakes, basalt flakes, muscovite, zinc phosphate, aluminum phosphate, low-melting glass powder, white carbon black, and inorganic pigments, and the filler has a mass ratio of 0.1% to 50% based on the mass of the priming coating.

In some embodiments, the solvent is selected from one or more of alkane solvents, ether solvents, ketone solvents, benzene derivative solvents, and ester solvents.

In some embodiments, the solvent has a mass of 0.1% to 50% based on the mass of the priming coating.

In some embodiments, the additive is selected from one or more of a dispersant, an anticorrosive agent, and a wetting and leveling agent.

In some embodiments, the additive has a mass of 0.1% to 5% based on the mass of the priming coating.

In some embodiments, the top coating is composed of the following components by mass percentage: 10% to 50% silica sol, 1% to 25% epoxy-modified siloxane, 0% to 20% polysilane-like compound, 0.1% to 5% anti-graffiti additive, and 10% to 70% solvent.

In some embodiments, the solvent is butyl acetate.

In a second aspect, the present application provides a method for preparing the double-layer coating mentioned above, comprising the preparation methods of the priming coating and the top coating.

The preparation method of the priming coating comprises:
mixing the polysilane-like compound and the metal precursor to obtain the ceramic precursor, i.e., component A;
mixing and grinding raw materials other than the ceramic precursor to obtain component B with a fineness of ≤15 µm;
finally, mixing component A with component B to obtain the priming coating.

The preparation method of the top coating comprises:
mixing silica sol, epoxy-modified siloxane, polysilane-like compound, anti-graffiti additive, and the solvent to obtain the top coating.

In some embodiments, the mixing is carried out by stirring at a stirring speed of 100 r/min to 2000 r/min.

In a third aspect, the present application provides a double-layer coat formed from the double-layer coating mentioned above.

In a fourth aspect, the present application provides a coated article, comprising a substrate and a coat attached to at least a portion of the surface of the substrate, wherein the coat is the double-layer coat formed from the double-layer coating mentioned above.

According to the coated article provided by the present application, the substrate is a metal substrate, a glass substrate, a ceramic substrate, an enamel substrate, a polymer substrate, or a composite substrate, or a compound substrate comprising two or more of the metal substrate, the glass substrate, the ceramic substrate, the enamel substrate, the polymer substrate and the composite substrate.

The coated article provided by the present application is a household appliance.

In some embodiments, the article is a water heater.

The above one or more technical solutions in the embodiments of the present application have at least one of the following technical effects:

The present application provides a double-layer coating and preparation method therefor and application thereof, wherein the priming coating uses a copolymerization product obtained by reacting a ceramic precursor and a resin as the main resin, and the ceramic precursor is composed of a specific polysilane-like compound and a metal precursor, achieving low adhesion performance on the material surface, thereby effectively preventing the formation of limescale, as well as improving anti-corrosion performance and reducing energy consumption.

Furthermore, the top coating of the present application also has excellent low surface energy, which can further prevent the formation of limescale and is particularly suitable for appliances such as water heaters that heat water.

Additional aspects and advantages of the present application will be partially given in the following description, some of which will become apparent from the following description, or will be learned through practice of the present application.

### Brief Description of the Drawings

Figure 1 is a diagram showing the limescale status of a heater coated with the coating of Example 1 of the present application;
Figure 2 is a diagram showing the limescale status of the blank control.

### Specific Modes for Carrying Out the Embodiments

The embodiments of the present application are further described in detail below with reference to the examples. The following embodiments are for the purpose of illustrating the present application but are not intended to limit the scope of the present application.

In the description of this specification, the description with reference to the terms such as "one embodiment", "some embodiments", "example", "specific example", or "some examples" means that the specific features, structures, materials or characteristics described in conjunction with that embodiment or example are included in at least one embodiment or example of the embodiments of the present application. In the present specification, the exemplary expressions of the above terms do not necessarily refer to the same embodiment or example. Also, the specific features, structures, materials, or characteristics described may be combined in any suitable manner in any one or more embodiments or examples. In addition, a person skilled in the art may integrate and combine different embodiments or examples and features of different embodiments or examples described in the present specification without mutual contradiction.

In the first aspect, the present application provides a double-layer coating, comprising a priming coating and a top coating, wherein the priming coating comprises a ceramic precursor and a resin, the ceramic precursor is composed of a polysilane-like compound and a metal precursor, the polysilane-like compound is selected from one or more of polycarbosilane, polyborosilazane, and polysilicon-boron-carbon-nitrogen, and the metal precursor is selected from one or more of a zirconium precursor, an aluminum precursor, and a titanium precursor.

The present application uses a copolymerization product obtained by the reaction of the ceramic precursor with excellent reactivity and the resin as the main resin of the priming coating, wherein the ceramic precursor is composed of the specific polysilane-like compound and metal precursor. Low adhesion performance on the material surface can be achieved by ways such as chemically grafting groups of low surface energy and constructing micro-nano structures, thereby effectively preventing the formation of limescale. Meanwhile, the present application uses a copolymerization product obtained by reacting the ceramic precursor with the resin as the main resin of the priming coating, and the film formed has excellent compactness and improved anti-corrosion performance; in addition, the coating system has excellent adhesion performance, thereby no roughening such as sandblasting is required, and only the oil stains on the surface of the workpiece are required to be removed to achieve excellent adhesion between the coating and the substrate. Compared with enamel materials, the priming coating of the present application can achieve excellent adhesion between the coating and the substrate without using heavy metals such as cobalt and nickel. In addition, the present application can achieve excellent adhesion performance under low-temperature conditions (below 300°C) due to the use of organic polymer materials as the main resin. Compared with the sintering temperature of enamel of greater than 850°C, the energy consumption is significantly reduced. In general, the coating of the present application is significantly superior to the currently adopted coating materials such as enamel and stainless steel, and is particularly suitable for the surface treatment of water heaters.

In the present application, the zirconium precursor refers to a type of organic polymer with a main chain of Zr-O and a side chain containing a reactive group, which can be converted into an inorganic substance under conditions such as heating.

The aluminum precursor refers to a type of organic polymer with a main chain of Al-O and a side chain containing a reactive group, which can be converted into an inorganic substance under conditions such as heating.

The titanium precursor refers to a type of organic polymer with a main chain of Ti-O and a side chain containing a reactive group, which can be converted into an inorganic substance under conditions such as heating.

In some embodiments of the present application, the mass ratio of the polysilane-like compound to the metal precursor is 3:1 to 1:6.

The resin described in the present application is a commonly used coating resin and can stably react with a ceramic precursor. In some embodiments of the present application, the resin is polysiloxane resin, and/or epoxy resin.

In some embodiments, the resin is a mixture of polysiloxane resin and epoxy resin in a mass ratio of 20:0 to 8:15.

In some embodiments of the present application, the mass ratio of the ceramic precursor to the resin is 99:1 to 10:90.

In some embodiments of the present application, the priming coating further comprises one or more of a filler, a solvent, and an additive.

On the one hand, the addition of a filler can impart the coating a certain color, and on the other hand, it can make the coating more compact and more conducive to corrosion resistance. In some embodiments of the present application, the filler is selected from one or more of silicon carbide, talc, glass flakes, basalt flakes, muscovite, zinc phosphate, aluminum phosphate, low-melting glass powder, white carbon black, and inorganic pigments, and the filler has a mass of 0.1% to 50% based on the mass of the priming coating. In some embodiments, the filler has a mass of 30% to 50% based on the mass of the priming coating.

In some embodiments of the present application, the solvent is selected from one or more of alkane solvents, ether solvents, ketone solvents, benzene derivative solvents, and ester solvents, and the solvent has a mass of 0.1% to 50% based on the mass of the priming coating. In some embodiments, the solvent has a mass of 20% to 40% based on the mass of the priming coating.

The alkane solvent is selected from one or more of n-hexane, n-octane, n-decane, trichloromethane, dichloromethane, dichloroethylene, and mineral oil.

The ether solvent is at least one selected from ethyl ether, petroleum ether, and dibutyl ether.

The ketone solvent is at least one selected from acetone, methyl ethyl ketone, cyclohexanone, and isophorone.

The benzene derivative solvent is at least one selected from toluene, m-xylene, p-xylene, o-xylene, and chlorobenzene.

The ester solvent is selected from ethyl acetate and propyl propionate. In some embodiments, the ester solvent is ethyl acetate.

In some embodiments of the present application, the additive is selected from one or more of additives such as dispersants, anti-corrosion agents, wetting and leveling agents, anti-graffiti agents that can enhance the performance of the coating composition, and the additive has a mass of 0.1% to 5% based on the mass of the priming coating.

In some embodiments of the present application, the top coating is composed of the following components by mass percentage: 10% to 50% silica sol, 1% to 25% epoxy-modified siloxane, 0% to 20% polysilane-like compound, 0.1% to 5% anti-graffiti additive, and 10% to 70% solvent.

In the top coating, the solvent is butyl acetate. Butyl acetate can dissolve and mix the components better.

In a second aspect, the present application provides a method for preparing the double-layer coating mentioned above, comprising the preparation methods of the priming coating and the top coating.

The preparation method of the priming coating comprises:
mixing the polysilane-like compound and the metal precursor to obtain the ceramic precursor, i.e., component A;
mixing and grinding raw materials other than the ceramic precursor to obtain component B with a fineness of ≤15 µm;
finally, mixing component A with component B to obtain the priming coating.

The preparation method of the top coating comprises:
mixing silica sol, epoxy-modified siloxane, polysilane-like compound, anti-graffiti additive, and the solvent to obtain the top coating.

During the preparation of the priming coating and the top coating, the mixing can be carried out by conventional means in the art such as stirring. In some embodiments, the stirring speed is 100 r/min to 2000 r/min.

When grinding component B, a commonly used device in the art, such as a sand mill, a basket grinder, a high-speed disperser and the like, can be used to grind the mixed material to a fineness of ≤15 µm.

In some embodiments of the present application, when mixing to obtain component B, the resin is first dispersed in the solvent, and then the remaining materials are added and mixed uniformly.

It can be understood that the order of component addition, stirring speed, stirring time, grinding method, and the like mentioned in the preparation method are only typical values in the experimental process. By adjusting the order and processing parameters to other values, coatings with similar performance can also be obtained. Most of the differences are just in production efficiency.

In a third aspect, the present application provides a double-layer coat formed from the double-layer coating mentioned above.

Specifically, during the formation of the coat, the priming coating is first applied to the substrate surface by common construction methods such as spraying, brushing, and roller coating, and a priming coating is formed after drying. Then, the top coating is applied to the dried priming coating to finally form a double-layer coat.

In some embodiments of the present application, the priming coating has a thickness of 15 µm to 25 µm and the top coating has a thickness of 4 µm to 7 µm for better longevity and limescale inhibition.

In a fourth aspect, the present application provides a coated article, comprising a substrate and a coat attached to at least a portion of the surface of the substrate, wherein the coat is the double-layer coat formed from the coating composition mentioned above.

In some embodiments of the present application, the substrate is a metal substrate, a glass substrate, a ceramic substrate, an enamel substrate, a polymer substrate, or a composite substrate, or a compound substrate comprising two or more of the metal substrate, the glass substrate, the ceramic substrate, the enamel substrate, the polymer substrate and the composite substrate.

In some embodiments of the present application, the article is a household appliance. In some embodiments, the article is a water heater.

There are many household appliances, such as microwave ovens, baking ovens, range hoods, stoves, vacuum cleaners, dishwashers, air conditioners, refrigerators, washing machines, water heaters and the like, which all require coating applications. However, the coating of the present application is more suitable for water heaters because the double-layer coating specifically solves problems such as scale buildup easily and corrosion, and can also withstand certain high temperatures (about 100°C), which is different from the coating previously developed by the applicant which is more suitable for household appliances such as microwave ovens and baking ovens that require higher temperature resistance (about 400°C).

Specific Examples will be described below.

In the following Examples, if no specific techniques or conditions are indicated, the techniques or conditions described in the literature in the art or product manuals are used. The reagents or instruments without indicating the manufacturer are all conventional products that are commercially available through regular channels.

In the following Examples, the zirconium precursor used is an organic polymer with a main chain of Zr-O and a side chain containing hydrogen, vinyl, and methyl groups. The aluminum precursor used is an organic polymer with a main chain of Al-O and a side chain containing hydrogen, vinyl, and methyl groups. The titanium precursor used is an organic polymer with a main chain of Ti-O and a side chain containing hydrogen, vinyl, and methyl groups.

### Example 1

The present Example provides a double-layer coating, comprising a priming coating and a top coating.

The priming coating is composed of the following components by mass percentage: 4% polycarbosilane, 11% zirconium precursor, 20% polysiloxane resin, 5% talc, 15% glass flakes, 2% white carbon black, 3% low-melting glass powder, 13% copper chromite black, 10.4% diethylene glycol butyl ether, 16% propylene glycol methyl ether acetate, 0.5% dispersant, and 0.1% wetting and leveling agent. The preparation method thereof is as follows:

### (1)Preparation of component A:

4% polycarbosilane and 11% zirconium precursor were weighed and mixed uniformly.

### (2) Preparation of component B:

20% polysiloxane resin was mixed with 10.4% diethylene glycol butyl ether and 16% propylene glycol methyl ether acetate at a stirring speed of 500 r/min until uniformly dissolved, then 0.5% dispersant, 0.1% wetting and leveling agent, 5% talc, 15% glass flakes, 2% white carbon black, 3% low-melting glass powder and 13% copper chromite black were added one by one, and pre-mixed at a stirring speed of 1000 r/min until the materials were uniformly mixed.

The premix described above was ground to a fineness of ≤15 µm using a sand mill at a stirring speed of 2000 r/min.

### (3) Preparation of the priming coating:

Component A described above was mixed with component B at a stirring speed of 600 r/min until uniformly mixed to make the priming coating.

The top coating is composed of the following components by mass percentage: 10% silica sol, 25% epoxy-modified siloxane, 20% polysilazane, 3% anti-graffiti additive, and 42% butyl acetate. The preparation method thereof is as follows:

10% silica sol, 25% epoxy-modified siloxane, 20% polysilazane, 3% anti-graffiti additive, and 42% butyl acetate were added to a mixing tank one by one, and mixed at a stirring speed of 1000 r/min until uniformly mixed to obtain the top coating.

### Example 2

The present Example provides a double-layer coating, comprising a priming coating and a top coating.

The priming coating is composed of the following components by mass percentage: 2% polysilicon-boron-carbon-nitrogen, 11.4% aluminum precursor, 8% polysiloxane resin, 15% epoxy resin, 3% silicon carbide, 10% glass flakes, 5% mica, 3% zinc phosphate, 3% low-melting glass powder, 17% copper chromite black, 5% petroleum ether, 5% butyl acetate, 12% propylene glycol methyl ether acetate, 0.5% dispersant, and 0.1% wetting and leveling agent. The preparation method thereof is as follows:

### (1) Preparation of component A:

2% polysilicon-boron-carbon-nitrogen and 11.4% aluminum precursor were weighed and mixed uniformly.

### (2) Preparation of component B:

8% polysiloxane resin and 15% epoxy resin were mixed with 5% petroleum ether, 5% butyl acetate, and 12% propylene glycol methyl ether acetate at a stirring speed of 500 r/min until uniformly dissolved, then 0.5% dispersant, 0.1% wetting and leveling agent, 3% silicon carbide, 10% glass flakes, 5% mica, 3% zinc phosphate, 3% low-melting glass powder, and 17% copper chromite black were added one by one, and pre-mixed at a stirring speed of 900 r/min until the materials were uniformly mixed.

The premix described above was ground to a fineness of ≤15 µm using a sand mill at a stirring speed of 2000 r/min.

### (3) Preparation of the priming coating:

Component A described above was mixed with component B at a stirring speed of 400 r/min until uniformly mixed to obtain the priming coating.

The top coating is composed of the following components by mass percentage: 50% silica sol, 1% epoxy-modified siloxane, 13% polysilazane, 2% anti-graffiti additive, and 34% butyl acetate. The preparation method thereof is as follows:

50% silica sol, 1% epoxy-modified siloxane, 13% polysilazane, 2% anti-graffiti additive, and 34% butyl acetate were added to a mixing tank one by one, and mixed at a stirring speed of 100 r/min until uniformly mixed to obtain the top coating.

### Example 3

The present Example provides a double-layer coating, comprising a priming coating and a top coating.

The priming coating is composed of the following components by mass percentage: 4% polyborosilazane, 12% titanium precursor, 12% polysiloxane resin, 17% epoxy resin, 3% silicon carbide, 3% talc, 7% basalt flakes, 4% zinc phosphate, 4% aluminum phosphate, 5% low-melting glass powder, 10% copper chromite black, 6% p-xylene, 12.4% propylene glycol methyl ether acetate, 0.5% dispersant, and 0.1% wetting and leveling agent. The preparation method thereof is as follows:

### (1) Preparation of component A:

4% polyborosilazane and 12% titanium precursor were weighed and mixed uniformly.

### (2) Preparation of component B:

12% polysiloxane resin and 17% epoxy resin were mixed with 6% p-xylene and 12.4% propylene glycol methyl ether acetate at a stirring speed of 700 r/min until uniformly dissolved, then 0.5% dispersant, 0.1% wetting and leveling agent, 3% silicon carbide, 3% talc, 7% basalt flakes, 4% zinc phosphate, 4% aluminum phosphate, 5% low-melting glass powder and 10% copper chromite black were added one by one, and pre-mixed at a stirring speed of 1000 r/min until the materials were uniformly mixed.

The premix described above was ground to a fineness of ≤15 µm using a sand mill at a stirring speed of 2000 r/min.

### (3) Preparation of the priming coating:

Component A described above was mixed with component B at a stirring speed of 600 r/min until uniformly mixed to obtain the priming coating.

The top coating is composed of the following components by mass percentage: 30% silica sol, 15% epoxy-modified siloxane, 12% polysilazane, 5% anti-graffiti additive, and 38% butyl acetate. The preparation method thereof is as follows:

30% silica sol, 15% epoxy-modified siloxane, 12% polysilazane, 5% anti-graffiti additive, and 38% butyl acetate were added to a mixing tank one by one, and mixed at a stirring speed of 700 r/min until uniformly mixed to obtain the top coating.

### Example 4

The present Example provides a double-layer coating, comprising a priming coating and a top coating.

The priming coating is composed of the following components by mass percentage: 15% polyborosilazane, 5% zirconium precursor, 10% polysiloxane resin, 10% epoxy resin, 10% silicon carbide, 4% basalt flakes, 4% zinc phosphate, 5% low-melting glass powder, 10% copper chromite black, 10% p-xylene, 16.4% propylene glycol methyl ether acetate, 0.5% dispersant, and 0.1% wetting and leveling agent. The preparation method thereof is as follows:

### (1) Preparation of component A:

15% polyborosilazane and 5% zirconium precursor were weighed and mixed uniformly.

### (2) Preparation of component B:

10% polysiloxane resin and 10% epoxy resin were mixed with 10% p-xylene and 16.4% propylene glycol methyl ether acetate at a stirring speed of 800 r/min until uniformly dissolved, then 0.5% dispersant, 0.1% wetting and leveling agent, 10% silicon carbide, 4% basalt flakes, 4% zinc phosphate, 5% low-melting glass powder and 10% copper chromite black were added one by one, and pre-mixed at a stirring speed of 1000 r/min until the materials were uniformly mixed.

The premix described above was ground to a fineness of ≤15 µm using a sand mill at a stirring speed of 2000 r/min.

### (3) Preparation of the priming coating:

Component A described above was mixed with component B at a stirring speed of 700 r/min until uniformly mixed to obtain the priming coating.

The top coating is composed of the following components by mass percentage: 20% silica sol, 20% epoxy-modified siloxane, 20% polysilazane, 0.5% anti-graffiti additive, and 39.5% butyl acetate. The preparation method thereof is as follows:

20% silica sol, 20% epoxy-modified siloxane, 20% polysilazane, 0.5% anti-graffiti additive, and 39.5% butyl acetate were added to a mixing tank one by one, and mixed at a stirring speed of 600 r/min until uniformly mixed to obatin the top coating.

### Example 5

The present Example provides a double-layer coating, comprising a priming coating and a top coating.

The priming coating is composed of the following components by mass percentage: 2% polycarbosilane, 16% titanium precursor, 10% polysiloxane resin, 10% epoxy resin, 10% silicon carbide, 4% basalt flakes, 4% zinc phosphate, 5% low-melting glass powder, 10% copper chromite black, 10% p-xylene, 18.4% propylene glycol methyl ether acetate, 0.5% dispersant, and 0.1% wetting and leveling agent. The preparation method thereof is as follows:

### (1) Preparation of component A:

2% polycarbosilane and 16% titanium precursor were weighed and mixed uniformly.

### (2) Preparation of component B:

10% polysiloxane resin and 10% epoxy resin were mixed with 10% p-xylene and 18.4% propylene glycol methyl ether acetate at a stirring speed of 800 r/min until uniformly dissolved, then 0.5% dispersant, 0.1% wetting and leveling agent, 10% silicon carbide, 4% basalt flakes, 4% zinc phosphate, 5% low-melting glass powder and 10% copper chromite black were added one by one, and pre-stirred at a stirring speed of 1000 r/min until the materials are uniformly mixed.

The premix described above was ground to a fineness of ≤15 µm using a sand mill at a stirring speed of 2000 r/min.

### (3) Preparation of the priming coating:

Component A described above was mixed with component B at a stirring speed of 700 r/min until uniformly mixed to make the priming coating.

The top coating is composed of the following components by mass percentage: 20% silica sol, 20% epoxy-modified siloxane, 20% polysilazane, 0.5% anti-graffiti additive, and 39.5% butyl acetate. The preparation method thereof is as follows:

20% silica sol, 20% epoxy-modified siloxane, 20% polysilazane, 0.5% anti-graffiti additive, and 39.5% butyl acetate were added to a mixing tank one by one, and mixed at a stirring speed of 600 r/min until uniformly mixed to obtain the top coating.

### Example 6

The present Example provides a double-layer coating, comprising a priming coating and a top coating.

The priming coating is composed of the following components by mass percentage: 4% polyborosilazane, 12% titanium precursor, 12% polysiloxane resin, 17% epoxy resin, 3% silicon carbide, 3% talc, 7% basalt flakes, 4% zinc phosphate, 4% aluminum phosphate, 5% low-melting glass powder, 10% copper chromite black, 6% p-xylene, 12.4% propylene glycol methyl ether acetate, 0.5% dispersant, and 0.1% wetting and leveling agent. The preparation method thereof is as follows:

### (1)Preparation of component A:

4% polyborosilazane and 12% titanium precursor were weighed and mixed uniformly.

### (2) Preparation of component B:

12% polysiloxane resin and 17% epoxy resin were mixed with 6% p-xylene and 12.4% propylene glycol methyl ether acetate at a stirring speed of 700 r/min until uniformly dissolved, then 0.5% dispersant, 0.1% wetting and leveling agent, 3% silicon carbide, 3% talc, 7% basalt flakes, 4% zinc phosphate, 4% aluminum phosphate, 5% low-melting glass powder and 10% copper chromite black were added one by one, and pre-stirred at a stirring speed of 1000 r/min until the materials were uniformly mixed.

The premix described above was ground to a fineness of ≤15 µm using a sand mill at a stirring speed of 2000 r/min.

### (3) Preparation of the priming coating:

Component A described above was mixed with component B at a stirring speed of 600 r/min until uniformly mixed to obtain the priming coating.

The top coating is composed of the following components by mass percentage: 30% silica sol, 15% polyester-modified siloxane, 12% polyborosilazane, 5% anti-graffiti additive, and 38% butyl acetate. The preparation method thereof is as follows:

30% silica sol, 15% polyester-modified siloxane, 12% polyborosilazane, 5% anti-graffiti additive, and 38% butyl acetate were added to a mixing tank one by one, and mixed at a stirring speed of 700r/min until uniformly mixed to obtain the top coating.

### Comparative Example 1

The present Comparative Example provides a double-layer coating, comprising a priming coating and a top coating.

The priming coating is 100% polyborosilazane.

The top coating is composed of the following components by mass percentage: 25% silica sol, 25% epoxy-modified siloxane, 1% anti-graffiti additive, and 49% butyl acetate. The preparation method thereof is as follows:

25% silica sol, 25% epoxy-modified siloxane, 1% anti-graffiti additive, and 49% butyl acetate were added to a mixing tank one by one, and mixed at a stirring speed of 1200 r/min until uniformly mixed to obtain the top coating.

### Comparative Example 2

The present Comparative Example provides a double-layer coating, comprising a priming coating and a top coating.

The priming coating is 100% polysilazane.

The top coating is composed of the following components by mass percentage: 45% silica sol, 17% epoxy-modified siloxane, 16% polysilazane, 2% anti-graffiti additive, and 20% butyl acetate. The preparation method thereof is as follows:

45% silica sol, 17% epoxy-modified siloxane, 16% polysilazane, 2% anti-graffiti additive, and 20% butyl acetate were added to a mixing tank one by one, and mixed at a stirring speed of 1500 r/min until uniformly mixed to obtain the top coating.

### Comparative Example 3

The present Comparative Example provides a coating, comprising a priming coating and a top coating.

The priming coating is composed of the following components by mass percentage: 10% polysilazane, 30% epoxy resin, 10% silicon carbide, 15% basalt flakes, 2% white carbon black, 13% copper chromite black, 19.5% p-xylene, and 0.5% dispersant. The preparation method thereof is as follows:

### (1) Preparation of component A:

10% polysilazane ceramic precursor was weighed.

### (2) Preparation of component B:

30% epoxy resin and 19.5% p-xylene were mixed at a stirring speed of 500 r/min until uniformly dissolved, then 0.5% dispersant, 10% silicon carbide, 15% basalt flakes, 2% white carbon black, and 13% copper chromite black were added one by one, and pre-mixed at a stirring speed of 800 r/min until the materials were uniformly mixed.

The premix described above was ground to a fineness of ≤15 µm using a sand mill at a stirring speed of 2000 r/min.

### (3) Preparation of priming coating:

Component A described above was mixed with component B at a stirring speed of 300 r/min until uniformly mixed to obtain the priming coating.

The top coating is composed of the following components by mass percentage: 35% silica sol, 10% epoxy-modified siloxane, 10% polysilazane, 4% anti-graffiti additive, and 41% butyl acetate. The preparation method thereof is as follows:

35% silica sol, 10% epoxy-modified siloxane, 10% polysilazane, 4% anti-graffiti additive, and 41% butyl acetate were added to a mixing tank one by one, and mixed at a stirring speed of 500 r/min until uniformly mixed to obtain the top coating.

### Comparative Example 4

The present Comparative Example provides a double-layer coating, comprising a priming coating and a top coating.

The preparation method of the priming coating is described in Example 2 of CN109401618A, specifically as follows:

Raw materials for preparation comprising polysilazane and polysiloxane were provided, wherein R1 of the polysilazane is an aryl group, R2 is a hydrogen group, R3 is an alkylamino group, and the polysilazane accounts for 40% by mass of the raw materials for preparation; and R4 of the polysiloxane is a cycloalkane, R5 is an alkylsiloxy group, and the polysiloxane accounts for 30% by mass of the raw materials for preparation;

Polysilazane and polysiloxane were placed in a reactor, and polysilazane and polysiloxane were mixed at a stirring speed of 800 r/min. Polysiloxane and polysilazane were subjected to a copolymerization reaction to generate a polysiloxane-polysilazane copolymer;

Dibutyl ether was provided, wherein dibutyl ether accounts for 30% by mass of the raw materials for preparation, and dibutyl ether and the polysiloxane-polysilazane copolymer were mixed at a stirring speed of 1000 r/min to obtain the priming coating.

The preparation of the top coating is the same as that in Example 1.

### Performance Testing

The coatings obtained in each Example and Comparative Example are subjected to the cross-cut test according to GB/T 9286 to measure the adhesion between the coating and the substrate (heater substrate, stainless steel), respectively.

The coatings obtained in each Example and Comparative Example are applied to the surface of the heater, respectively. For the comparability of experimental results, the heater material (stainless steel) and shape are the same, and the thickness of the coating is consistent. The working environment of the heating tube in an electric water heater is simulated, and standard added water(the hardness value of the water quality is adjusted to 400 mg/L to 500 mg/L and the concentration of chloride ion is 200 mg/L to 300 mg/L by adding chemical reagents such as calcium chloride, magnesium chloride, and sodium bicarbonate into the water, so that the water is prone to scaling and is corrosive to metals) is used, a heating cycle is set by including a fixed time of power-on (20 minutes) and a fixed time of power-off (5 minutes), and finally heating temperature is set within a certain range (75±5°C). The heater is subjected to 150 to 250 heating cycles, and the time point during which the limescale increased the most is used as the comparison time point of the limescale inhibition rate. Meanwhile, the corrosion resistance effects of each group of heaters are compared in this test environment. The endpoint of corrosion resistance is judged by the corrosion penetration of the heater and short circuit tripping (with protection mechanisms during the test). The results are shown in Table 1.

**Table 1**

| | Limescale inhibition rate | Corrosion resistance to standard added water | Adhesion of cross-cut test |
|---|---|---|---|
| Example 1 | 97% | 121 h | Grade 0 |
| Example 2 | 99% | 118 h | Grade 0 |
| Example 3 | 94% | 109 h | Grade 0 |
| Example 4 | 98% | 120 h | Grade 0 |
| Example 5 | 91% | 99 h | Grade 1 |
| Example 6 | 88% | 72 h | Grade 0 |
| Comparative Example 1 | 89% | 97 h | Grade 0 |
| Comparative Example 2 | 92% | 71 h | Grade 0 |
| Comparative Example 3 | 94% | 68 h | Grade 2 |
| Comparative Example 4 | 63% | 102 h | Grade 0 |
| Blank control | / | 40 h | / |

In table 1, the blank control refers to the heater surface without any coating. Limescale inhibition rate = (the weight of limescale on the surface of the blank heater - the weight of limescale on the surface of the heater coated with coating) / the weight of limescale on the surface of the blank heater * 100%. In addition, it should be noted that the test of corrosion resistance to standard added water of the present application is an accelerated test, so the time of corrosion resistance to the standard added water in Table 1 does not represent the actual corrosion time of the product. This value is only used to compare and illustrate the advantages and disadvantages of each group of coatings.

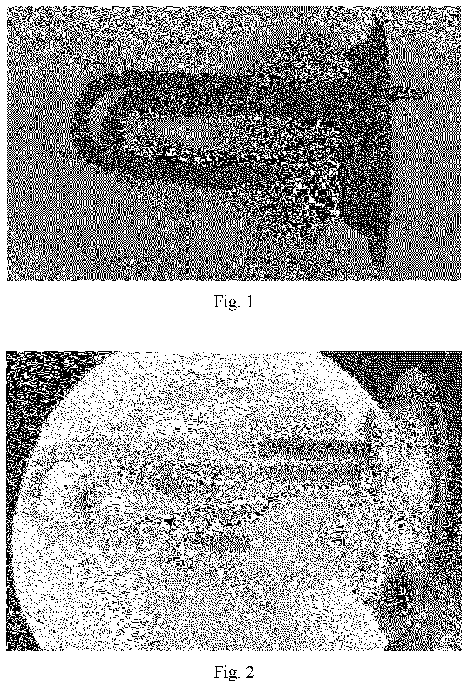

Figure 1 is a diagram showing the limescale status of a heater coated with the coating of Example 1 of the present application, and Figure 2 is a diagram showing the limescale status of the blank control.

The above results show that the double-layer coating obtained in the Examples of the present application can be firmly bonded with the heater substrate and has good properties of limescale resistance and corrosion resistance.

Finally, it should be noted that the above embodiments are only used to illustrate the present application, rather than to limit the present application. Although the present application has been described in detail with reference to the embodiments, those skilled in the art should understand that various combinations, modifications, or equivalent substitutions of the technical solutions of the present application do not depart from the spirit and scope of the technical solutions of the present application and should be included in the scope of the claims of the present application.

### Industrial Applicability

The present application provides a double-layer coating and preparation method therefor and application thereof. The double-layer coating comprises a priming coating and a top coating, the priming coating comprises a ceramic precursor and a resin, the ceramic precursor is composed of a polysilane-like compound and a metal precursor, the polysilane-like compound is selected from one or more of polycarbosilane, polyborosilazane, polysilicon-boron-carbon-nitrogen, and the metal precursor is selected from one or more of a zirconium precursor, an aluminum precursor, and a titanium precursor. The priming coating of the present application uses a copolymerization product obtained by reacting the ceramic precursor with the resin as the main resin, and the ceramic precursor is composed of the specific polysilane-like compound and the metal precursor, achieving low adhesion performance on the material surface, thereby effectively preventing the formation of limescale, as well as improving anti-corrosion performance and reducing energy consumption, and having good economic value and application prospects.

## Claims

1. A double-layer coating comprising a priming coating and a top coating, wherein the priming coating comprises a ceramic precursor and a resin, the ceramic precursor is composed of a polysilane-like compound and a metal precursor, the polysilane-like compound is selected from one or more of polycarbosilane, polyborosilazane, and polysilicon-boron-carbon-nitrogen, and the metal precursor is selected from one or more of a zirconium precursor, an aluminum precursor, and a titanium precursor.

2. The double-layer coating of claim 1, wherein a mass ratio of the polysilane-like compound to the metal precursor is 3:1 to 1:6.

3. The double-layer coating of claim 1 or 2, wherein the resin is polysiloxane resin and/or epoxy resin.

4. The double-layer coating of claim 3, wherein the resin is a mixture of polysiloxane resin and epoxy resin in a mass ratio of 20:0 to 8:15.

5. The double-layer coating of claim 3, wherein a mass ratio of the ceramic precursor to the resin is 99:1 to 10:90.

6. The double-layer coating of any one of claims 1 to 5, wherein the priming coating further comprises one or more of a filler, a solvent, and an additive.

7. The double-layer coating of claim 6, wherein the filler is one or more selected from silicon carbide, talc, glass flakes, basalt flakes, muscovite, zinc phosphate, aluminum phosphate, low-melting glass powder, white carbon black, and inorganic pigments, and the filler has a mass of 0.1% to 50% based on the mass of the priming coating;
the solvent is selected from one or more of alkane solvents, ether solvents, ketone solvents, benzene derivative solvents, and ester solvents, and the solvent has a mass of 0.1% to 50% based on the mass of the priming coating;
the additive is selected from one or more of a dispersant and a wetting and leveling agent, and the additive has a mass of 0.1% to 5% based on the mass of the priming coating.

8. The double-layer coating of any one of claims 1 to 7, wherein the top coating is composed of the following components by mass percentage: 10% to 50% silica sol, 1% to 25% epoxy-modified siloxane, 0% to 20% polysilane-like compound, 0.1% to 5% anti-graffiti additive, and 10% to 70% solvent.

9. The double-layer coating of claim 8, wherein the solvent is butyl acetate.

10. A method for preparing the double-layer coating of any one of claims 1 to 9, wherein the preparation method of the priming coating comprises:
mixing the polysilane-like compound and the metal precursor to obtain the ceramic precursor, i.e., component A;
mixing and grinding raw materials other than the ceramic precursor to obtain component B with a fineness of ≤15 µm;
finally, mixing component A with component B to obtain the priming coating;
and/or,
the preparation method of the top coating comprises:
mixing silica sol, epoxy-modified siloxane, polysilane-like compound, anti-graffiti additive and the solvent to obtain the top coating.

11. The preparation method of claim 10, wherein the mixing is carried out by stirring at a stirring rate of 100 r/min to 2000 r/min.

12. A double-layer coat, forming from the double-layer coating of any one of claims 1 to 9.

13. A coated article comprising a substrate and a coat attached to at least a portion of the surface of the substrate, wherein the coat is the double-layer coat of claim 12.

14. The article of claim 13, wherein the substrate is a metal substrate, a glass substrate, a ceramic substrate, an enamel substrate, a polymer substrate or a composite substrate, or a compound substrate comprising two or more of the metal substrate, the glass substrate, the ceramic substrate, the enamel substrate, the polymer substrate and the composite substrate.

15. The article of claim 13 or 14, wherein the article is a household appliance.

16. The article of claim 15, wherein the article is a water heater.
